(19) **Europäisches Patentamt / European Patent Office / Office européen des brevets**

(11) **EP 4 318 293 B1**

(12) **FASCICULE DE BREVET EUROPEEN**

(45) Date de publication et mention de la délivrance du brevet:
**16.10.2024 Bulletin 2024/42**

(21) Numéro de dépôt: **23189573.1**

(22) Date de dépôt: **03.08.2023**

(51) Classification Internationale des Brevets (IPC):
**G06F 21/64** *(2013.01)* **H04L 9/32** *(2006.01)*
**H04L 9/08** *(2006.01)* **H04L 9/00** *(2022.01)*
**G06F 21/10** *(2013.01)*

(52) Classification Coopérative des Brevets (CPC):
**G06F 21/64; H04L 9/0877; H04L 9/0897;
H04L 9/3297; H04L 9/50;** H04L 2209/56

(54) **MÉTHODE DE GÉNÉRATION DE PREUVE DE TEMPS ÉCOULÉ ENTRE ÉVÈNEMENTS DANS UN RÉSEAU DE NOEUDS ASYNCHRONES**

**VERFAHREN ZUR ERZEUGUNG VON EINEM NACHWEIS DER VERSTRICHENEN ZEIT ZWISCHEN EREIGNISSEN IN EINEM ASYNCHRONEN KNOTENNETZWERK**

**METHOD FOR GENERATING PROOF OF ELAPSED TIME BETWEEN EVENTS IN ASYNCHRONOUS NODE NETWORK**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **05.08.2022 FR 2208140**

(43) Date de publication de la demande:
**07.02.2024 Bulletin 2024/06**

(73) Titulaire: **COMMISSARIAT A L'ENERGIE ATOMIQUE ET AUX ENERGIES ALTERNATIVES
75015 Paris (FR)**

(72) Inventeurs:
• **HENNEBERT, Christine
38054 GRENOBLE CEDEX 09 (FR)**
• **PAULIN, Dylan
38054 GRENOBLE CEDEX 9 (FR)**

(74) Mandataire: **Brevalex
Tour Trinity
1 B Place de la Défense
92400 Courbevoie (FR)**

(56) Documents cités:
**US-A1- 2021 176 058 US-A1- 2021 314 143**

• **MIC BOWMAN ET AL: "On Elapsed Time Consensus Protocols", vol. 20210127:132313, 23 January 2021 (2021-01-23), pages 1 - 47, XP061051923, Retrieved from the Internet <URL:https://eprint.iacr.org/2021/086.pdf> [retrieved on 20210123]**

**Description**

**DOMAINE TECHNIQUE**

La présente invention concerne de manière générale les méthodes de preuve de temps écoulé entre deux évènements dans un réseau asynchrone. Elle trouve notamment application dans un mécanisme de consensus relatif à un historique de transactions sur un registre distribué (*ledger*).

**ÉTAT DE LA TECHNIQUE ANTÉRIEURE**

De nombreux mécanismes de consensus ont été proposés pour valider des transactions avant de les incorporer dans un registre distribué (*ledger*), les plus connus étant la preuve de travail ou PoW (*Proof of Work*) et la preuve d'enjeu ou PoS (*Proof of Stake*). Ces mécanismes servent généralement plusieurs objectifs : celui de vérifier l'intégrité des transactions, c'est-à-dire que celles-ci ne sont ni falsifiées ni corrompues, celui d'authentifier les entités ayant émis ces transactions, et enfin celui de garantir la correction de l'historique de ces transactions. En effet, la modification de l'historique de différentes transactions peut conduire à des situations très dommageables : double dépense, débit d'un compte en cryptomonnaie en absence de crédit suffisant, violation d'une condition d'exécution d'un contrat intelligent. La preuve de travail permet de garantir de manière vérifiable (mais au prix d'une certaine latence) un historique correct des transactions mais requiert une consommation considérable d'énergie. Qui plus est, la preuve de travail comme la preuve d'enjeu suppose de mettre en place un système de récompense des mineurs qui n'est pas approprié à certains contextes d'application.

La preuve de temps écoulé et/ou la vérification de temps écoulé est un sujet qui suscite beaucoup d'intérêt dans la mesure où il est au coeur de la sécurité et de la confiance dans la technologie des chaînes de blocs. Les recherches actuelles portent sur les fonctions dites fonctions de durée vérifiables (ou de manière équivalente des fonctions de délai ou d'intervalle de temps vérifiables) ou VFD (*Vérifiable Delay Functions*). Ces fonctions font appel à un triplet d'algorithmes : un algorithme d'initialisation (*Setup*) d'un couple de paramètres d'évaluation ($e_k$) et de vérification ($v_k$) en fonction d'un niveau de sécurité ($\lambda$) et d'une durée donnée ($T$), un algorithme d'évaluation d'une fonction (*Eval*) à partir d'une valeur d'entrée ($x$) et du paramètre d'évaluation ($e_k$), la fonction d'évaluation donnant une valeur de sortie ($y$) et une preuve ($\pi$) et enfin un algorithme de vérification (*Verify*) fournissant un résultat booléen à partir du paramètre de vérification ($v_k$), des valeurs d'entrée et de sortie ($x, y$) et de la preuve ($\pi$). Le principe d'une telle fonction de vérification de durée est qu'il n'est pas possible d'anticiper la valeur des paramètres $e_k$ et $v_k$ avant l'expiration de la durée $T$, et que toute parallélisation de calcul pour exécuter l'algorithme d'initialisation plus rapidement conduit à un résultat d'évaluation non distinguable d'un nombre aléatoire.

On pourra trouver une présentation des fonctions de durée vérifiables dans l'article de D. Boneh et al. intitulé « Verifiable delay functions », publié dans Advances in Cryptology, , CRYPTO 2018, Springer Int'l Publishing, pp. 757-788. Les fonctions de durée vérifiables peuvent être implémentées de différentes manières.

Une première approche consiste à construire une telle fonction au moyen d'une enclave sécurisée ou TEE (*Trusted Execution Environment*). Plus précisément, une telle enclave exécute l'algorithme d'évaluation précité. Elle reçoit la valeur d'entrée x ainsi qu'un couple de paramètres d'évaluation et de vérification ($e_k, v_k$), et fournit en sortie, d'une part, une valeur hachée $y$ de $x$, au moyen d'une fonction de hachage dont la complexité dépend du paramètre de difficulté $\lambda$, et, d'autre part, une preuve $\pi$ obtenue comme signature de $y$ au moyen de la clé privée d'un cryptosystème asymétrique stocké dans l'enclave. L'enclave est synchronisée sur une horloge externe pour effectuer l'évaluation de la durée $T$. Toutefois, cette horloge est un point d'attaque singulier (*single point of failure*) et peut faire l'objet d'agissements malveillants susceptibles de corrompre le résultat de l'évaluation.

Une seconde approche consiste à effectuer séquentiellement des tirages d'un nombre aléatoire, à effectuer un hachage de la valeur d'entrée x concaténée avec le nombre aléatoire ainsi obtenu, soit $x|\alpha$ jusqu'à ce qu'une certaine condition sur le résultat de hachage soit vérifiée, ladite condition dépendant du degré de difficulté $\lambda$. C'est sur ce principe que se base la preuve de travail utilisée dans les chaînes de blocs Bitcoin et Ethereum, très consommatrice en énergie. D'autres fonctions d'évaluation basées sur des SNARK (*Succinct Non-Interactive ARguments of Knowledge*) récursifs (SNARK de SNARK). Celles-ci font appel à des fonctions de hachage récursives utilisant des techniques de chiffrement homomorphe, également très consommatrices en énergie.

Enfin, une troisième approche pour implémenter la fonction d'évaluation est de faire appel à une construction polynomiale consistant à calculer séquentiellement ($\lambda$ fois) le carré d'une fonction de hachage dans un corps de Galois. Comme la précédente, cette approche nécessite de faire d'importants calculs non parallélisables et non optimisables, ce qui conduit donc encore à une importante consommation en énergie.

L'algorithme de preuve de temps écoulé PoET (*Proof of Elapsed Time*) est un mécanisme de consensus de type Nakamoto pour chaines de blocs à accès contrôlé (*permissioned blockchains*) qui nécessite une consommation d'énergie sensiblement plus faible que dans Bitcoin. La preuve de travail (PoW) est remplacée ici par un système de loterie qui génère un temps d'attente aléatoire pour chaque mineur (ou noeud validateur) de la chaîne. Pour ce faire, chaque mineur dispose d'une enclave sécurisée (TEE) qui lui fournit un temps aléatoire certifié qu'il doit attendre avant d'être autorisé à soumettre son prochain bloc au consensus. N'importe quel noeud participant de la chaîne doit pouvoir vérifier que le temps d'attente a bien été généré par le tirage aléatoire certifié dans l'enclave sécurisée et que ce temps d'attente a bien été respecté par le mineur.

L'algorithme PoET a été déployé dans la chaîne de blocs Hyperledger Sawtooth avec succès. Toutefois, les enclaves sécurisées (SGX) utilisent un temporisateur externe situé à l'extérieur de la zone d'exécution de confiance (TEE) et sont susceptibles de subir certaines attaques matérielles visant à corrompre les temps d'attente générés. Les documents US 2021/176058, US 2021/314143, et l'article de Mic Bowman et al. intitulé "On Elapsed Time Consensus Protocols", publié dans IACR, International Association for Cryptologic Research, vol. 20210127:132313 23 janvier 2021 (2021-01-23), pages 1-47 , sont considérés des documents pertinent dans le domaine de génération d'une preuve de temps d'attente qu'un noeud devrait attendre avant d'être élu pour accéder et ajouter un nouveau bloc de consensus à une chaîne de blocs.

Un objet de la présente invention est par conséquent de proposer une méthode de preuve de temps écoulé entre transactions émises par un noeud vers un registre distribué (*ledger*) et, de manière plus générale, entre évènements intervenant dans un noeud de réseau asynchrone, qui ne présente pas les inconvénients précités, notamment qui soit relativement simple, faiblement consommatrice en énergie et robuste aux attaques matérielles.

## EXPOSÉ DE L'INVENTION

La présente invention est définie dans la revendication 1 par une méthode de preuve de temps écoulé entre évènements successifs intervenant dans un noeud d'un réseau asynchrone, ledit noeud comprenant un système embarqué partitionné en une zone de confiance et une zone non sécurisée, la zone de confiance comprenant un environnement d'exécution sécurisé ou TEE dans lequel l'intégrité et la confidentialité du code et des données sont assurées, et un composant matériel de confiance ou TPM comportant une première horloge, dit horloge de contrôle donnant le temps écoulé à partir de sa dernière initialisation et un compteur monotone indiquant le nombre d'initialisations de l'horloge de contrôle, l'environnement TEE disposant d'une seconde horloge, dite horloge système, et recevant d'une part l'horloge de contrôle du TPM et d'autre part une troisième horloge, dite horloge de précision, d'un périphérique extérieur au système embarqué, l'horloge de contrôle présentant un degré de sécurité supérieur à l'horloge système et à l'horloge de précision, l'horloge de précision présentant une précision et une stabilité supérieures à celles de l'horloge de contrôle et de l'horloge système, les évènements successifs incluant au moins deux évènements se produisant successivement dans le noeud, dénommés évènement antérieur et évènement postérieur, dans laquelle:

une application résidant dans l'environnement TEE mesure le temps auquel intervient l'évènement antérieur, la mesure étant effectuée à l'aide de la première, de la seconde et de la troisième horloges, pour fournir une première, une seconde et une troisième mesures de temps relatives à l'évènement antérieur;

ladite application mesure le temps auquel intervient l'évènement postérieur, la mesure étant effectuée à l'aide de la première, de la seconde et de la troisième horloges, pour fournir une première, une seconde et une troisième mesures de temps relatives à l'évènement postérieur;

ladite application détermine, à partir des mesures ainsi obtenues respectivement pour l'évènement antérieur et pour l'évènement postérieur, une première, une seconde et une troisième mesures de temps écoulé entre l'évènement antérieur et l'évènement postérieur;

ladite application vérifie la cohérence des première, seconde et troisième horloges en comparant les mesures de temps écoulé ainsi obtenues et si elles ne diffèrent pas plus d'une marge de tolérance prédéterminée, forme un message de preuve de temps écoulé entre l'évènement antérieur et l'évènement postérieur, le message de temps écoulé comprenant la valeur du compteur monotone, les mesures de temps relatives à l'évènement postérieur et les dérives des seconde ($\varepsilon_{TEE}$) et troisième horloge ($\varepsilon_{GPS}$) par rapport à la première horloge sur l'intervalle de temps écoulé ;

ladite application signe ledit message avec une clé privée du noeud avant de le transmettre sur le réseau asynchrone.

Avantageusement, les dérives de l'horloge de contrôle et de l'horloge système par rapport à l'horloge de précision sont intégrées dans le temps par ladite application et que, lorsque l'une d'elles excède une valeur maximale prédéterminée, celle-ci est corrigée.

Suivant la méthode, tout évènement pour lequel il est possible de déterminer l'heure à laquelle l'évènement survient peut être pris en compte parmi les évènements successifs au sens de la présente divulgation. Un des évènements successifs peut être par exemple, de manière non limitative, la formation d'une transaction par le noeud client.

Un des évènements successifs peut être par exemple le début ou la fin d'une opération, par exemple le début ou la fin de la réalisation d'une fonction ; ou encore la réalisation d'une condition (ou critère), etc.

Ainsi, de nombreux autres évènements que la formation de transactions peuvent être pris en compte en tant qu'évènements successifs, comme par exemple :

Pour l'évènement antérieur :

- La finalisation de la construction d'un bloc de la blockchain, une fois toutes les nouvelles transactions provenant d'un MEMPOOL incluses dans le bloc ;
- La réception d'un bloc valide ; ou
- Un évènement (event) venant d'un réseau de pairs (une telle resynchronisation peut être observée dans les mécanismes d'élection de leader; c'est alors une horloge globale qui donne le top départ au processus de consensus) ;

Pour l'évènement postérieur :

- La réalisation d'une condition fixée par un minuteur, ou la fin d'un calcul déterminé, ou l'obtention d'une solution à un problème, notamment un challenge (problème cryptographique) ; ou
- La réception d'un bloc valide ou d'un évènement provenant du réseau de pairs.

La présente invention concerne également une méthode de preuve de temps écoulé entre transactions successives émises par un noeud, dit noeud client, à destination d'un registre distribué, caractérisée en ce qu'elle met en oeuvre une méthode de preuve de temps écoulé entre évènements successifs telle que définie ci-dessus, chacun des évènements successifs étant la formation d'une transaction par ledit noeud client.

Avantageusement, la transaction émise par le noeud client comprend en outre un haché du code de l'application au moment où la transaction est formée.

Selon un exemple de réalisation, la transaction émise par le noeud client comprend en outre la valeur d'un compteur de transactions, ledit compteur étant incrémenté à chaque transaction émise.

La transaction émise par le noeud client peut comprend en outre une mesure du temps auquel la transaction précédente a été émise, la mesure ayant été effectuée au moyen de l'horloge de contrôle et étant signée par une clé privée du module TPM.

Selon une variante, préalablement à l'émission des transactions successives, le noeud client émet une transaction d'enregistrement à destination du registre distribué, ladite transaction d'enregistrement comprenant une valeur initiale du compteur monotone, et indique les valeurs initiales de l'horloge de contrôle, de l'horloge système et de l'horloge de précision.

La vérification peut être effectuée par un noeud tiers du réseau asynchrone, dit noeud validateur, pour une nouvelle transaction émise par le noeud client, ladite méthode étant caractérisée en ce que le noeud validateur extrait de la transaction courante la valeur du compte monotone et vérifie dans le registre distribué qu'elle est identique à celle de la transaction précédente, puis extrait les dérives des seconde et troisième horloges et les compare à une marge de tolérance prédéterminée pour vérifier la cohérence des horloges du noeud client.

Avantageusement, préalablement à la vérification de la cohérence des horloges du noeud client, le noeud vérificateur s'assure à l'aide de la signature de la transaction que celle-ci a bien été émise par le noeud client.

Le noeud vérificateur extrait ensuite de la transaction du noeud client la valeur de l'horloge de précision et la compare à la valeur de sa propre horloge de précision à la réception de cette transaction, et vérifie que la différence de la seconde avec la première est supérieure à zéro et inférieure un temps de propagation maximal prédéterminé.

De préférence, le noeud vérificateur est un noeud présentant un degré de fiabilité supérieur à une valeur prédéterminée, le degré de fiabilité d'un noeud étant une fonction croissante du nombre de transactions validées avec succès et du temps écoulé depuis son enregistrement dans le registre distribué.

Si la vérification a été effectuée avec succès, le noeud validateur émet une transaction, dite de transaction de validation, comprenant un haché de la transaction validée et le temps auquel elle a été reçue, mesurée par l'horloge de précision du noeud validateur.

Le noeud validateur peut vérifier préalablement la cohérence de ses première, seconde et troisième horloges avant d'émettre la transaction de validation vers le registre distribué.

La transaction de validation comprend typiquement les mesures du temps auquel est effectuée la validation au moyen des première, seconde et troisième horloges, la valeur du compteur monotone du noeud validateur ainsi que les dérives des seconde ( $\varepsilon_{TEE}^{val}$ ) et troisième horloge ( $\varepsilon_{GPS}^{val}$ ) du noeud validateur par rapport à la première horloge du noeud validateur sur l'intervalle de temps écoulé depuis la dernière transaction émise par le noeud validateur.

Avantageusement, la transaction de validation comprend en outre un haché du code exécutant la vérification dans l'environnement TEE du noeud validateur, au moment où la transaction du noeud client est validée.

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

[Fig. 1] représente de manière schématique un réseau de noeuds asynchrones illustrant le contexte d'application de la présente invention ;

[Fig. 2] représente de manière schématique un système embarqué dans un noeud asynchrone permettant de mettre en oeuvre la méthode de génération de preuve de temps écoulé entre deux évènements selon un mode de réalisation de la présente invention ;

[Fig. 3] représente une vérification de la cohérence des temps mesurés par différentes horloges dans le système embarqué de la Fig. 2 ;

[Fig. 4] représente un organigramme d'une méthode de génération de preuve de temps écoulé entre évènements successifs au sein d'un noeud, selon un mode général de réalisation de la présente invention ;

[Fig. 5] représente une méthode de vérification du temps écoulé entre transactions successives émises par un noeud dans un registre distribué ;

[Fig. 6A] représente de manière schématique une étape d'enregistrement d'un noeud client dans la mise en oeuvre de la méthode de vérification de la Fig. 5 ;

[Fig. 6B] représente de manière schématique une étape de validation de temps écoulé entre deux transactions successives émises par un noeud client.

## EXPOSÉ DÉTAILLÉ DE MODES DE RÉALISATION PARTICULIERS

Nous considérons dans la suite un réseau de noeuds asynchrones, chaque noeud pouvant émettre des messages sur le réseau. Par réseau de noeuds asynchrones, nous entendons que les différents noeuds du réseau ne sont pas synchronisés par une horloge commune.

Sans perte de généralité, nous supposerons dans la suite que ces messages sont des transactions destinées à être enregistrées dans un registre distribué (*distributed ledger*), pouvant être un graphe de transactions ou une chaîne de blocs. La chaîne de blocs est formée par la concaténation de transactions ordonnées temporellement et estampillées par les noeuds qui les ont émises.

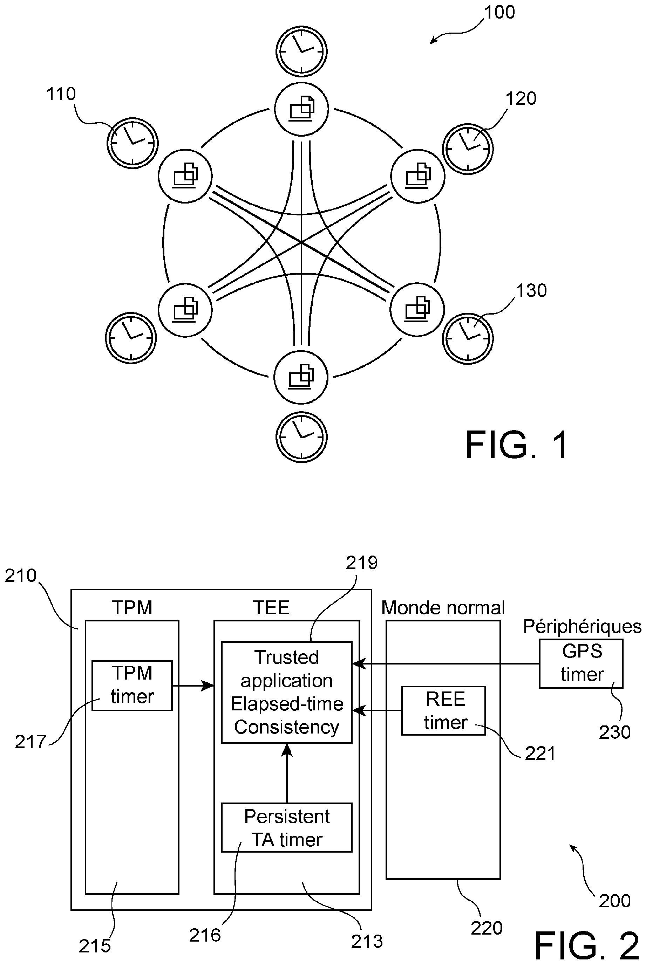

Un réseau de noeuds asynchrones, 100, a été représenté de manière schématique en Fig. 1.

Il comprend au moins un noeud émetteur, 110, capable de générer et émettre une transaction, dite transaction client, fournissant une preuve de temps écoulé, et au moins un noeud validateur, 120, destiner à vérifier l'exactitude de la preuve ainsi fournie, le noeud validateur stockant la transaction dans le registre distribué lorsque la preuve est considérée exacte. Chaque noeud du réseau, 130, peut ensuite lire la transaction dans le registre et vérifier que cette preuve est bien exacte.

La génération de preuve de temps écoulé dans le noeud émetteur fait appel à un système embarqué comportant une zone de confiance, dont l'architecture est schématiquement représentée en Fig. 2.

Le système embarqué ou SOM (*System On Module*), 200, peut être réalisé sous la forme d'une carte fille destinée à être enfichée sur la carte mère du noeud en question. Le système embarqué comporte une zone de confiance 210, comprenant elle-même un environnement d'exécution sécurisée, 213, encore dénommé TEE (*Trusted Execution Environment*) et un composant matériel de confiance, 215, encore dénommé TPM (*Trusted Platform Module*). La zone de confiance, 210, est isolée de la zone d'environnement non sécurisé, dit « normal », 220.

Le code d'exécution et les données qui résident dans l'environnement TEE sont protégées contre des attaques logicielles. Plus précisément, la confidentialité et l'intégrité du code d'exécution et des données y sont garanties. Le TEE dispose d'un processeur et d'une zone mémoire permettant à des applications qui y résident de pouvoir être exécutées sans risque de corruption. Un exemple de TEE est SGX™ (*Software Guard extensions*) de la société Intel.

Le module TPM, 215, est un équipement passif dépourvu de système d'exploitation mais pouvant contenir des éléments matériels sécurisés tels qu'un coffre-fort pour stocker des clés cryptographiques, un générateur de nombre aléatoire, ou, comme dans le cas présent, un compteur jouant le rôle de chronomètre (*timer*) sécurisé.

Plusieurs horloges sont disponibles dans le système embarqué :

- une première horloge, *Clk_TPM ,* dite horloge de contrôle, 217, présentant le plus haut niveau de sécurité, est fournie par le module TPM. Elle donne le temps écoulé à partir de sa dernière initialisation. Cette horloge peut être réinitialisée au moyen d'une commande d'initialisation du TEE. A chaque fois que l'horloge de contrôle est initialisée, un compteur monotone permanent, dit compteur permanent de RAZ, est incrémenté. Il est important de noter que ce compteur permanent de RAZ ne peut jamais être réinitialisé y compris par le TEE. La dérive de l'horloge de contrôle par rapport à une horloge de référence peut en outre être corrigée par une commande d'ajustement du TEE ;

- une seconde horloge, *Clk_TEE,* est fournie par un compteur permanent (*persistent TA timer*), 221, du système d'exploitation de l'environnement TEE. La mise à jour de cette seconde horloge ne peut se faire qu'en accédant au niveau de privilège le plus élevé du système d'exploitation ;
- une troisième horloge est constituée par une horloge externe de précision supérieure à celle des deux premières, *Clk_GPS,* dite horloge de référence, par exemple un temps GPS fourni par un récepteur GPS, 230, à partir des messages satellitaires de navigation qu'il reçoit, est transmis à l'environnement TEE du système embarqué. Il convient cependant de noter que cette horloge de référence peut être corrompue, soit parce que des messages de navigation factices (GPS spoofing) sont reçus par le récepteur et conduisent à un temps erroné, soit parce que l'horloge externe fait l'objet d'une attaque lors de son acheminement entre le récepteur GPS et l'environnement TEE ;
- une quatrième horloge optionnelle peut être fournie par un module 221 du système d'exploitation de l'environnement non sécurisé, 220, du système embarqué (par exemple une horloge de système Linux). Cette horloge, *Clk_REE,* non protégée et modifiable par l'utilisateur, est transmise à l'environnement TEE.

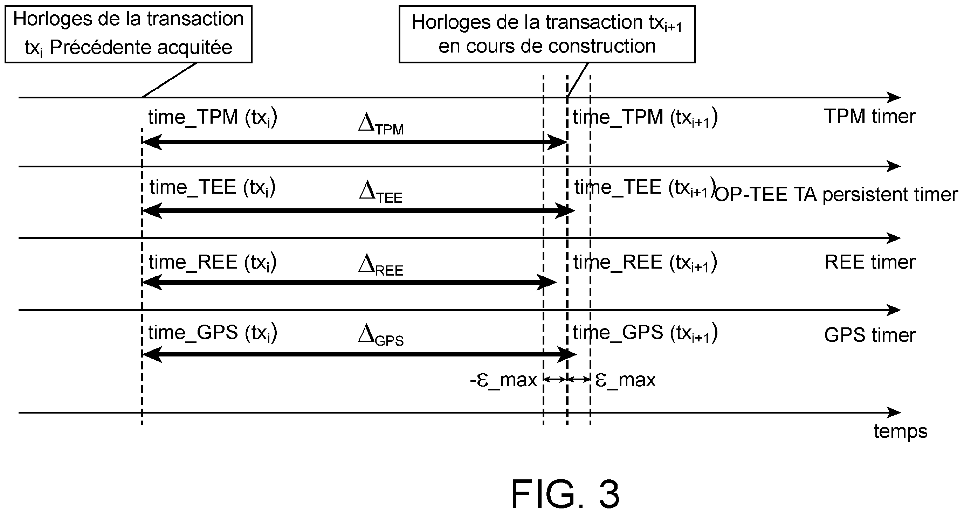

Une application de confiance (*trusted application*) destinée à être exécutée au sein de l'environnement TEE vise à vérifier la cohérence des différentes horloges et à concilier les mesures de temps écoulé entre deux événements, à partir de ces mêmes horloges. Plus précisément, comme illustré en Fig. 3, l'application de confiance, 219, notée ci-après *ETC_app,* s'assure que les intervalles de temps respectivement mesurés par l'horloge de référence, la seconde et le cas échéant la troisième horloge sont bien cohérents avec l'intervalle de temps mesuré par l'horloge de contrôle, autrement dit que :

[Math. 1]

$$|\Delta_{GPS} - \Delta_{TPM}| < \varepsilon_{max} \qquad (1\text{-}1)$$

[Math. 2]

$$|\Delta_{TEE} - \Delta_{TPM}| < \varepsilon_{max} \qquad (1\text{-}2)$$

[Math. 3]

$$|\Delta_{REE} - \Delta_{TPM}| < \varepsilon_{max} \qquad (1\text{-}3)$$

avec :
[Math. 4]

$$\Delta_{TPM} = time\_TPM(tx_{i+1}) - time\_TPM(tx_i), \qquad (2\text{-}1)$$

[Math. 5]

$$\Delta_{TEE} = time\_TEE(tx_{i+1}) - time\_TEE(tx_i), \qquad (2\text{-}2)$$

[Math. 6]

$$\Delta_{GPS} = time\_GPS(tx_{i+1}) - time\_GPS(tx_i), \qquad (2\text{-}3)$$

[Math. 7]

$$\Delta_{REE} = time\_REE(tx_{i+1}) - time\_REE(tx_i), \qquad (2\text{-}4)$$

et où $\varepsilon_{max}$ est une marge de tolérance, $tx_i$ et $tx_{i+1}$ sont deux évènements successifs quelconques se produisant dans le nœud, et observés par le système embarqué, par exemple les instants où sont émises deux transactions successives. Ces évènements sont un exemple d'évènement antérieur et d'évènement postérieur au sens de la présente divulgation.

Lorsque les conditions (1-1), (1-2) et, optionnellement (1-3), sont vérifiées, l'application *ETC_app* conclut à la cohérence des mesures de temps écoulé entre les évènements successifs et transmet sur le réseau un message de preuve de temps écoulé. Ce message comporte des données relatives à l'évènement postérieur $tx_{i+1}$, le rang de cet évènement, $i + 1$, le temps auquel cet évènement est intervenu, mesuré par les différentes horloges du système embarqué, les dérives des horloges extérieures au module TPM par rapport à l'horloge de contrôle, à savoir $\varepsilon_{GPS} = \Delta_{GPS} - \Delta_{TPM}$, $\varepsilon_{TEE} = \Delta_{TEE} - \Delta_{TPM}$ et, le cas échéant $\varepsilon_{REE} = \Delta_{REE} - \Delta_{TPM}$. Il est important de noter que les dérives sont estimées ici par rapport à l'horloge de contrôle, qui est la plus sûre, et non par rapport à l'horloge de référence qui est la plus précise et la plus stable. En revanche, au sein du système embarqué, dès lors que les conditions (1-1) à (1-3) sont remplies, autrement dit, dès lors que les mesures de temps écoulé sont cohérentes entre elles, les horloges du module TPM, de l'environnement TEE et de l'environnement REE sont corrigées de leur dérive par rapport à l'horloge de référence.

Un exemple de message de preuve de temps écoulé contient typiquement un premier champ de données contenant les données, *D*, relatives à l'évènement postérieur ($tx_{i+1}$) ; un compteur incrémenté à chaque nouvel évènement donnant l'indice ($i + 1$) de l'évènement postérieur; un premier champ temporel, donnant le temps auquel est intervenu cet évènement, mesuré par l'horloge de contrôle ainsi que le contenu du compteur permanent de RAZ, soit $time\_TPMi(tx_{i+1})\|CTRAZ$ ; un second champ temporel résultant de la concaténation du temps mesuré par l'horloge *Clk_TEE,* et de la dérive $\varepsilon_{TEE} = \Delta_{TEE} - \Delta_{TPM}$ sur l'intervalle séparant l'évènement postérieur et l'évènement antérieur, soit $time\_TEE(tx_{i+1})\|\varepsilon_{TEE}$ ; un troisième champ temporel résultant de la concaténation du temps écoulé, $\Delta_{GPS}$, mesuré par l'horloge de référence et de la dérive $\varepsilon_{GPS} = \Delta_{GPS} - \Delta_{TPM}$ par rapport à l'horloge de contrôle sur le même intervalle, soit $time\_GPS(tx_{i+1})\|\varepsilon_{GPS}$ ; et enfin un quatrième champ temporel optionnel, résultant de la concaténation du temps mesuré par l'horloge *Clk_REE*, et de la dérive $\varepsilon_{REE} = \Delta_{REE} - \Delta_{TPM}$ , sur le même intervalle, soit $time\_REE(tx_{i+1})\|\varepsilon_{REE}$.

Le message peut également avantageusement comporter un champ supplémentaire contenant une valeur hachée du code de l'application de confiance, *ETC_app,* au moyen d'une fonction de hachage. Le code en question est celui qui est stocké dans l'environnement TEE au moment où l'application *ETC_app* effectue la vérification de cohérence.

Il peut enfin comprendre le temps auquel est intervenu l'évènement antérieur mesuré par l'horloge de contrôle, soit *time_TPM($tx_i$)*, stockée dans une mémoire de l'environnement TEE. Cette valeur permet de s'assurer du chainage temporel des évènements intervenus au sein du noeud émetteur.

Le message est ensuite signé au moyen de la clé privée du noeud émetteur et avant d'être transmis sur le réseau.

Un noeud tiers, dit noeud validateur, recevant un message de preuve de temps écoulé peut tout d'abord vérifier au moyen de la clé publique du noeud que le temps écoulé a bien été mesuré par le noeud émetteur. Il peut s'assurer ensuite, de la cohérence des horloges du noeud émetteur lors de la mesure. Pour ce faire, il s'assure tout d'abord que la valeur du compteur *CTRAZ* n'a pas changé depuis l'évènement antérieur, vérifie que les conditions (1-1), (1-2) et, le cas échéant, (1-3) sont bien respectées en comparant les valeurs absolues $|\varepsilon_{GPS}|$, $|\varepsilon_{TEE}|$ et, le cas échéant, $|\varepsilon_{REE}|$ , avec la marge de tolérance, $\varepsilon_{max}$. Si ces valeurs absolues sont inférieures à la marge de tolérance, le noeud validateur conclut à la cohérence des horloges.

Il peut enfin reconstruire l'historique des évènements au sein du noeud émetteur avec les intervalles de temps exacts entre évènements successifs. Les intervalles de temps sont donnés avec la précision de l'horloge de référence, *Clk_GPS,* et la fiabilité de l'horloge de contrôle, *Clk_TPM,* du noeud émetteur.

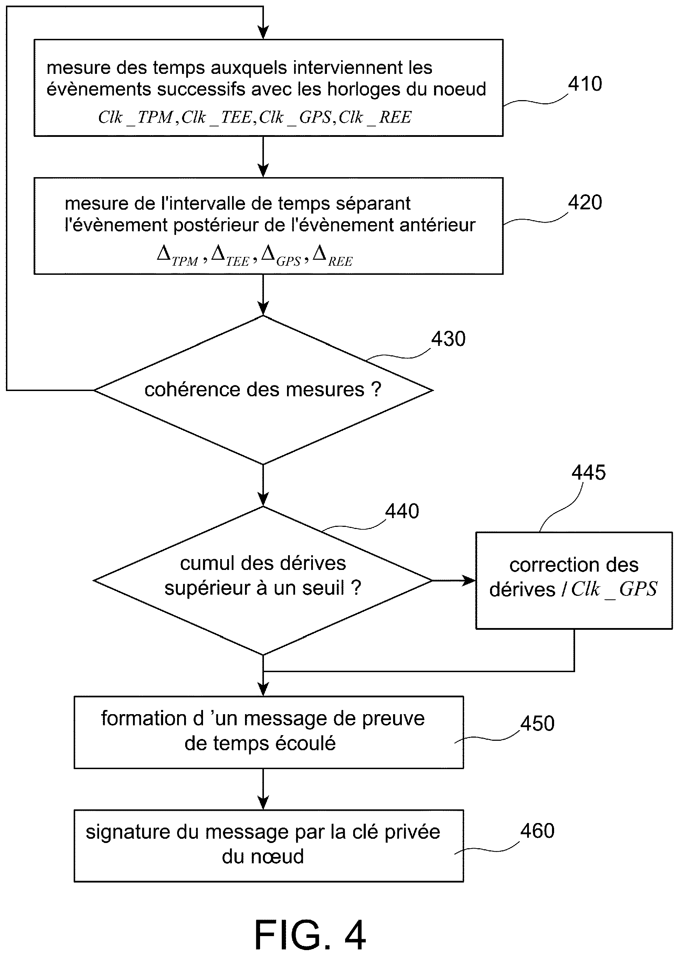

La Fig. 4 récapitule sous forme d'organigramme une méthode de génération de preuve de temps écoulé entre évènements successifs au sein d'un noeud, selon un mode général de réalisation de la présente invention.

On se place dans les mêmes conditions que précédemment, le système embarqué du noeud dispose au moins d'une première horloge, dite horloge de contrôle, au sein d'un module TPM, d'une seconde horloge fournie par le système d'exploitation de l'environnement TEE, dite horloge système, et d'une troisième horloge, externe et non protégée, de précision sensiblement supérieure à la première et la seconde horloges et, pour cette raison dénommée horloge de précision.

Dans une première étape 410, le système embarqué du noeud mesure le temps, ou plus précisément, les instants successifs, auxquels interviennent des évènements successifs se produisant dans le noeud, ou évènements observés. Ce temps est mesuré avec les première, seconde et troisième horloges.

On considère ici spécifiquement le fonctionnement du système embarqué en réaction aux deux évènements cités précédemment, à savoir l'évènement antérieur $tx_i$ et l'évènement postérieur $tx_{i+1}$.

A l'étape S410, le système embarqué mesure avec les première, seconde et troisième horloges le temps auquel se produit l'évènement antérieur $tx_i$. Il mesure ensuite, à nouveau avec les première, seconde et troisième horloges, le temps auquel se produit l'évènement postérieur $tx_{i+1}$.

A l'étape 420, une application de confiance dans la zone TEE vérifie la cohérence des horloges à partir des mesures obtenues pour l'évènement postérieur, *time_TPM($tx_{i+1}$)*, *time_TEE($tx_{i+1}$)*, et *time_GPS($tx_{i+1}$)*. A cette fin, l'application mesure l'intervalle de temps écoulé entre l'évènement postérieur et l'évènement antérieur, par différence avec les mesures réalisées pour l'évènement antérieur, *time_TPM($tx_i$)*, *time_TEE($tx_i$)*, et *time_GPS($tx_i$)*, également stockées

dans la zone TEE, soit $\Delta_{TPM}$, $\Delta_{TEE}$, $\Delta_{GPS}$. Plus précisément, l'application de confiance vérifie que les mesures d'intervalle de temps écoulé ne diffèrent pas plus d'une marge de tolérance prédéterminée, autrement dit que les dérives de la seconde et troisième horloges par rapport à la première sur l'intervalle séparant deux évènement successifs, sont inférieures à une marge de tolérance.

Dans l'affirmative, il est conclu à la cohérence des horloges et la méthode se poursuit à l'étape 440.

Dans la négative, la mesure n'est pas fiable ou une attaque a eu lieu et l'on retourne à l'étape 410 pour l'observation du prochain évènement. Alternativement, ou bien au terme de plusieurs échecs, le système embarqué se déclare en défaut.

A l'étape 440, si le cumul des dérives dans le temps excède une valeur maximale prédéterminée, les dérives sont corrigées en 445 sur la base de l'horloge de précision.

A l'étape 450, le système embarqué forme un message de preuve de temps écoulé comme décrit précédemment. En particulier, le message comprend un compteur d'évènements, le compteur permanent de RAZ, le temps auquel est intervenu ledit évènement, tel que mesuré au moyen des différentes horloges, soit $time\_TPM(tx_{i+1})$, $time\_TPM(tx_{i+1})$, $time\_TEE(tx_{i+1})$, et $time\_GPS(tx_{i+1})$ et les dérives des seconde et troisième horloges par rapport à l'horloge de contrôle, $\varepsilon_{TEE}$, $\varepsilon_{GPS}$. Le message peut en outre contenir le haché du code de l'application de confiance, $ETC\_app$ et/ou le haché du temps auquel est intervenu l'évènement antérieur.

A l'étape 460, le système embarqué signe le message au moyen de la clé secrète du noeud et transmet le message ainsi signé sur le réseau.

Cette méthode de génération de preuve permet à un noeud tiers du réseau de vérifier que le temps écoulé entre deux évènements successifs du noeud émetteur est bien correct. Elle peut être appliquée par exemple pour prouver les instants auxquels un capteur effectue des mesures dans un réseau IoT ou, comme décrit ci-après dans un mécanisme de consensus pour valider une ou plusieurs transaction(s) à ajouter au registre distribué (*ledger*).

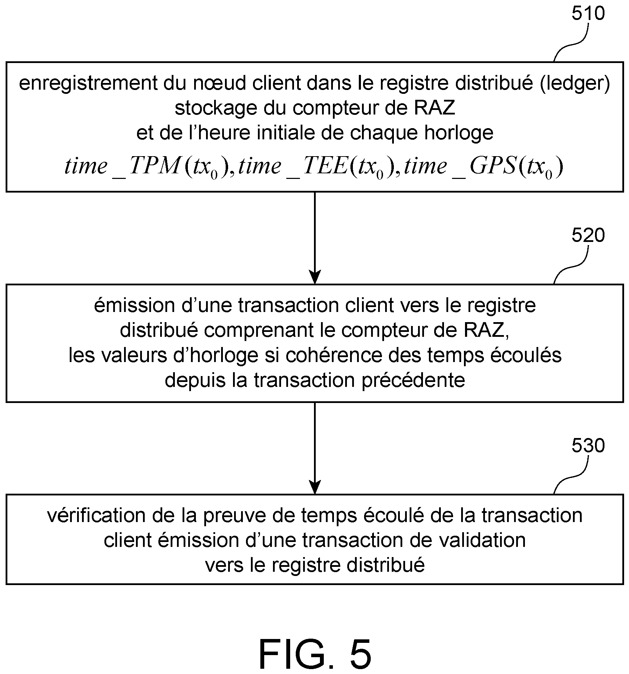

La Fig. 5 représente une méthode de vérification de temps écoulé entre transactions successives émises par un noeud à destination d'un registre distribué.

On supposera que la technologie de registre distribué employée, permet de déployer des contrats intelligents, encore dénommés contrats autonomes ou « *smort contracts* ». Un exemple d'une telle technologie est Ethereum. Pour rappel, un contrat intelligent est un programme qui est déployé (c'est-à-dire stocké) dans un registre distribué (*ledger*) et peut être exécuté par n'importe quel noeud du réseau.

La méthode de vérification décrite ci-après permet à un noeud vérificateur de vérifier le temps écoulé entre deux transactions successives émises par un noeud émetteur, encore dit client, vers un registre distribué. Le noeud émetteur comprend un système embarqué (SOM) tel que décrit précédemment en relation avec la Fig. 2.

Elle comprend une phase préalable d'enregistrement (*enrolment*), 510, au cours de laquelle le noeud émetteurtransmet une transaction à un premier contrat intelligent, $SC\_REC$. Cette phase d'enregistrement, décrite en détail plus loin, permet au noeud de s'authentifier vis-à-vis des pairs du réseau et de stocker dans la chaîne l'heure initiale de chacune des première, seconde et troisième horloges, $time\_TPM(tx_0)$, $time\_TEE(tx_0)$, $time\_GPS(tx_0)$ lues dans l'environnement TEE de son système embarqué.

Suite à cet enregistrement, le noeud émetteur peut émettre, en 520, des transactions, dites transactions « client », comportant, d'une part, une charge utile à enregistrer dans le registre distribué (ledger) et, d'autre part, une preuve de temps écoulé depuis l'émission de la dernière transaction. Cette transaction peut être considérée comme un cas particulier de message généré selon la méthode de génération de preuve précédemment décrite en relation avec la Fig. 5.

Cette transaction client comprend par conséquent, le compteur permanent de RAZ, les temps fournis par les différentes horloges internes, $Clk\_TPM$, $Clk\_TEE$, $Clk\_GPS$, le cas échéant, $Clk\_REE$, ainsi que leurs dérives respectives par rapport à l'horloge de contrôle.

La transaction client peut en outre contenir la valeur hachée du code de l'application de confiance, $\_app$ , et/ou celle du temps, $time\_TPM(tx_i)$, auquel le noeud client a émis la transaction précédente.

La cohérence des temps fournis par chacune des horloges est vérifiée par le noeud émetteur avant qu'il n'émette une transaction client à destination du registre distribué (ledger).

Tout noeud tiers du réseau peut ensuite vérifier que le temps écoulé entre deux transactions successives du noeud client est bien correct. Pour ce faire, il vérifie tout d'abord que le compteur permanent de RAZ n'a pas varié, puis vérifie que les mesures de temps écoulé entre la transaction courante et la transaction précédente, au moyen des différentes horloges internes, soit $\Delta_{TPM}$, $\Delta_{TEE}$, $\Delta_{GPS}$ ne diffèrent pas plus qu'une marge de tolérance $\varepsilon_{max}$. Alternativement ou cumulativement, il peut extraire les temps $time\_TPM(tx_{i+1})$, $time\_TEE(tx_{i+1})$, $time\_GPS(tx_{i+1})$, (le cas échéant $time\_REE(tx_{i+1})$) de la transaction en cours, et lire dans le registre distribué (ledger) les temps $time\_TPM(tx_i)$, $time\_TEE(tx_i)$, $time\_GPS(tx_i)$, $(time\_REE(tx_i))$, de la transaction précédente et en déduit les mesures de temps écoulé entre les transactions, par les différentes horloges, soit $\Delta_{TEE}$, $\Delta_{GPS}$, (et, le cas échéant, $\Delta_{REE}$). Les différences entre les mesures de temps écoulés ne doivent pas être supérieures à la marge de tolérance $\varepsilon_{max}$.

Certains noeuds dits validateurs (jouant le rôle de mineurs) peuvent attester qu'ils ont effectué une telle vérification avec succès et enregistrer cette attestation dans le registre distribué (ledger) au moyen d'une transaction, dite transaction de validation, transmis au contrat intelligent *SC_REC*.

Avant d'émettre une telle transaction en 520, un noeud validateur doit s'être préalablement enregistré selon la procédure d'enregistrement décrite plus haut et disposer d'une cotation de réputation suffisante, comme détaillé plus loin La transaction de validation atteste que le noeud validateur a effectué une vérification de la preuve de temps écoulé entre deux transactions successives d'un noeud client. Avant de procéder à la vérification de la cohérence des mesures de temps écoulé entre transactions clients successives, le noeud validateur s'assure lui-même de la cohérence de ses propres horloges.

La transaction de validation est spécifique en ce qu'elle comprend dans sa charge utile la valeur hachée de la transaction client qui a été vérifiée au moyen d'une fonction de hachage ainsi que le temps de référence auquel cette transaction client a été vérifiée.

Elle comprend en outre, selon le même format que la transaction client : un compteur incrémenté à chaque nouvelle transaction émise par le noeud validateur donnant ici l'indice ($j + 1$) de la transaction de validation ; un premier champ temporel, donnant le temps auquel est intervenu la validation, mesuré par l'horloge de contrôle du noeud validateur ainsi que le contenu du compteur permanent de RAZ de ce noeud, soit *time_TPM$^{val}$*(tx$_{j+1}$)$\|CTRAZ^{val}$ (l'indice supérieur « val » indique que la valeur est relative au noeud validateur); un second champ temporel résultant de la concaténation du temps écoulé entre les transactions *j* (non nécessairement une transaction de validation) et *j* + 1, tel que mesuré par l'horloge *Clk_TEE$^{val}$,* avec la dérive $\varepsilon_{TEE}^{val} = \Delta_{TEE}^{val} - \Delta_{TPM}^{val}$ sur l'intervalle séparant la transaction de validation et la transaction précédente du noeud validateur, soit $time\_TEE^{val}(tx_{j+1})\|\varepsilon_{TEE}^{val}$ ; un troisième champ temporel résultant de la concaténation du temps écoulé, $\Delta_{GPS}^{val}$ , tel que mesuré par l'horloge de référence du noeud validateur et de la dérive $\varepsilon_{GPS}^{val} = \Delta_{GPS}^{val} - \Delta_{TPM}^{val}$ rapport à l'horloge de contrôle du noeud validateur, soit $time\_GPS^{val}(tx_{j+1})\|\varepsilon_{GPS}^{val}$ ; et enfin un quatrième champ temporel optionnel, résultant de la concaténation du temps écoulé, mesuré par l'horloge *Clk_REE$^{val}$,* et de la dérive $\varepsilon_{REE}^{val} = \Delta_{REE}^{val} - \Delta_{TPM}^{val}$ , sur le même intervalle, soit $time\_REE^{val}(tx_{j+1})\|\varepsilon_{REE}^{val}$ .

La transaction de validation peut en outre contenir la valeur hachée du code de l'application de confiance, *ETC$^{val}$_app* et/ou celle du temps, *time_TPM$^{val}$*(tx$_{j+1}$), auquel a été émise la transaction précédente.

Avant de valider une transaction client, le noeud validateur peut s'assurer que le temps de référence auquel il procède à la validation est supérieur au temps de référence contenu dans la transaction client mais n'excède pas ce denier d'un temps de propagation maximal dans le réseau, autrement dit que :
[Math. 8]

$$0 < \left(time\_GPS^{val}(tx_{j+1}) - time\_GPS(tx_{i+1})\right) \leq \tau \qquad (3)$$

où $\tau$ est un temps de propagation maximal dans le réseau.

Un noeud du réseau peut se voir attribuer une cotation de confiance/ réputation en fonction du nombre *N* de transactions validées qu'il a émises et du temps écoulé $\Delta$ depuis son enregistrement dans la chaîne. Plus le nombre *N* est grand et plus la durée $\Delta$ est importante, plus le noeud sera considéré comme fiable. Lorsque la cotation de confiance/réputation d'un noeud est suffisamment élevée, il peut être autorisé à devenir noeud validateur. Le seuil de cotation requis pour être noeud validateur peut croître dans le temps, de manière à contrôler le nombre total de noeuds vérificateurs dans la chaine.

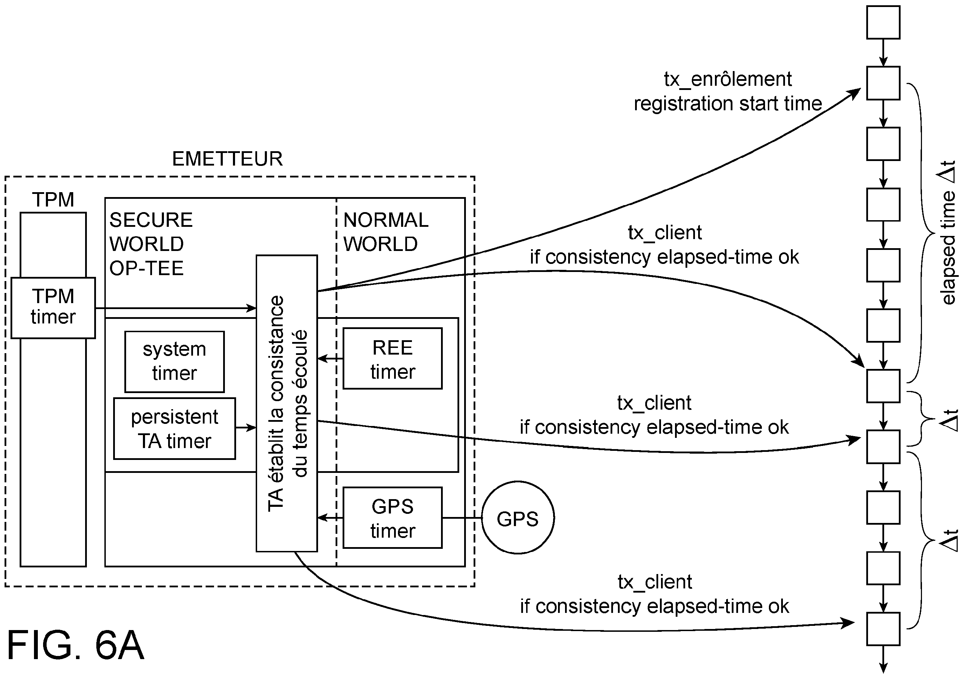

La Fig. 6A illustre l'étape d'enregistrement d'un noeud client, 510, dans la méthode de vérification de temps écoulé entre transactions successives de la Fig. 5.

La transaction d'enregistrement (désignée par *x_enrolment* sur la figure) du noeud est émise à un instant noté « *registration start time*» et enregistrée dans le registre distribué (ledger) après avoir été validée. Elle comprend les valeurs initiales des première, seconde et troisième horloges, *time_TPM*(tx$_0$), *time_TEE*(tx$_0$), *time_GPS*(tx$_0$) , la valeur du compteur de RAZ (ce compteur peut ne pas avoir une valeur nulle lors de l'enregistrement). Elle peut comprendre en outre le haché de l'application de confiance, *ETC_app,* ainsi que le temps (mesuré par l'horloge TPM) auquel a été émise la précédente transaction par le noeud client. La transaction d'enregistrement est signée au moyen de la clé privée du noeud en question.

Cette transaction est transmise au contrat intelligent d'enregistrement, *SC_REC.* Elle peut ensuite être validée par un noeud validateur, la validation étant ainsi simplifiée car la vérification de cohérence des mesures de temps écoulé depuis la transaction précédente est ici omise.

Une fois le noeud enregistré dans le registre distribué (ledger), celui-ci peut émettre des transactions client (notées *tx_client*) au contrat intelligent *SC_REC,* dès lors qu'il a vérifié la cohérence de ses horloges comme décrit précédemment. Chaque transaction comprend une preuve de temps écoulé entre la transaction émise et la transaction précédente.

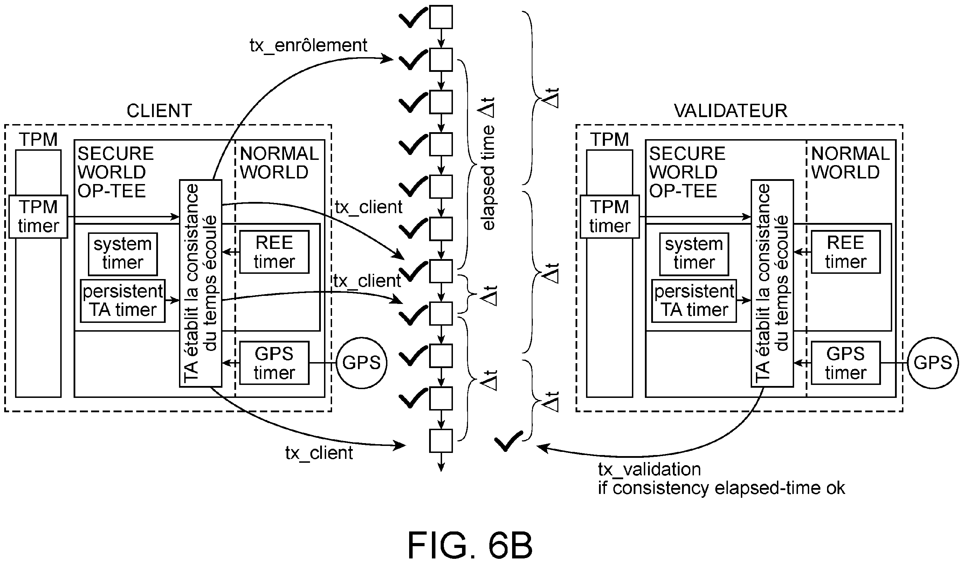

La Fig. 6B représente de manière schématique une étape de validation de temps écoulé entre deux transactions successives émises par un noeud client. Les transactions successives d'un même noeud sont authentifiées au moyen de leur signature.

Un noeud validateur peut vérifier la cohérence des mesures de temps écoulé entre transactions successives. Le noeud validateur s'assure tout d'abord que la valeur du compteur de RAZ n'a pas varié entre les deux transactions (pas de réinitialisation de l'horloge de contrôle), lit dans la transaction les valeurs des différentes horloges internes présentes dans la transaction courante, lit dans le registre distribué (ledger) les valeurs des horloges internes présentes dans la transaction précédente enregistrée dans le registre distribué (ledger), et en déduit les mesures de temps écoulé entre ces deux transactions au moyen des différentes horloges, à, savoir $\Delta_{TPM}$, $\Delta_{GPS}$, $\Delta_{TEE}$, et optionnellement $\Delta_{REE}$, et s'assure de leur cohérence entre elles à une marge de tolérance près. Si ces mesures sont cohérentes, le noeud validateur transmet au contrat intelligent une transaction de validation, après s'être assuré de la cohérence de ses propres horloges. La transaction client est enregistrée dans le registre distribué (*ledger*) lorsqu'elle est validée par un nombre prédéterminé de noeuds validateurs. L'enregistrement peut être effectué par bloc, après qu'un nombre prédéterminé de transactions client ont été validées.

## Revendications

1. Méthode de preuve de temps écoulé entre évènements successifs intervenant dans un noeud d'un réseau asynchrone, ledit noeud comprenant un système embarqué (200) partitionné en une zone de confiance (210) et une zone non sécurisée (220), la zone de confiance comprenant un environnement d'exécution sécurisé ou TEE (213) dans lequel l'intégrité et la confidentialité du code et des données sont assurées, et un composant matériel de confiance ou TPM (215) comportant une première horloge, dit horloge de contrôle donnant le temps écoulé à partir de sa dernière initialisation et un compteur monotone indiquant le nombre d'initialisations de l'horloge de contrôle, l'environnement TEE disposant d'une seconde horloge, dite horloge système, et recevant d'une part l'horloge de contrôle du TPM et d'autre part une troisième horloge, dite horloge de précision , d'un périphérique extérieur au système embarqué, l'horloge de contrôle présentant un degré de sécurité supérieur à l'horloge système et à l'horloge de précision, l'horloge de précision présentant une précision et une stabilité supérieures à celles de l'horloge de contrôle et de l'horloge système, les évènements successifs incluant au moins deux évènements se produisant successivement dans le noeud, dénommés évènement antérieur et évènement postérieur, dans laquelle :

   une application résidant dans l'environnement TEE mesure (410) le temps auquel intervient l'évènement antérieur, la mesure étant effectuée à l'aide de la première, de la seconde et de la troisième horloges, pour fournir une première, une seconde et une troisième mesures de temps relatives à l'évènement antérieur;
   ladite application mesure (410) le temps auquel intervient l'évènement postérieur, la mesure étant effectuée à l'aide de la première, de la seconde et de la troisième horloges, pour fournir une première, une seconde et une troisième mesures de temps relatives à l'évènement postérieur;
   ladite application détermine (420), à partir des mesures ainsi obtenues respectivement pour l'évènement antérieur et pour l'évènement postérieur, une première, une seconde et une troisième mesures de temps écoulé entre l'évènement antérieur et l'évènement postérieur;
   ladite application vérifie la cohérence (430) des première, seconde et troisième horloges en comparant les mesures de temps écoulé ainsi obtenues et si elles ne diffèrent pas plus d'une marge de tolérance prédéterminée, forme un message de preuve (440) de temps écoulé entre l'évènement antérieur et l'évènement postérieur, le message de temps écoulé comprenant la valeur du compteur monotone, les mesures de temps relatives à l'évènement postérieur et les dérives des seconde ($\varepsilon_{TEE}$) et troisième horloge ($\varepsilon_{GPS}$) par rapport à la première horloge sur l'intervalle de temps écoulé ;
   ladite application signe (460) ledit message avec une clé privée du noeud avant de le transmettre sur le réseau asynchrone.

2. Méthode de preuve de temps écoulé entre évènements successifs selon la revendication 1, **caractérisée en ce que** les dérives de l'horloge de contrôle et de l'horloge système par rapport à l'horloge de précision sont intégrées dans le temps par ladite application et que, lorsque l'une d'elles excède une valeur maximale prédéterminée, celle-ci est corrigée.

3. Méthode de preuve de temps écoulé entre transactions successives émises par un noeud, dit noeud client, à destination d'un registre distribué, **caractérisée en ce qu'**elle met en oeuvre une méthode de preuve de temps écoulé entre évènements successifs selon la revendication 1 ou 2, chacun des évènements successif étant la formation d'une transaction par ledit noeud client.

4. Méthode de preuve de temps écoulé entre transactions successives selon la revendication 3, **caractérisée en ce que** la transaction émise par le noeud client comprend en outre un haché du code de l'application au moment où la transaction est formée.

5. Méthode de preuve de temps écoulé entre transactions successives selon la revendication 3 ou 4, **caractérisée en ce que** la transaction émise par le noeud client comprend en outre la valeur d'un compteur de transactions, ledit compteur étant incrémenté à chaque transaction émise.

6. Méthode de preuve de temps écoulé entre transactions successives selon l'une des revendications 3 à 5, **caractérisée en ce que** la transaction émise par le noeud client comprend en outre une mesure du temps auquel la transaction précédente a été émise, la mesure ayant été effectuée au moyen de l'horloge de contrôle et étant signée par une clé privée du module TPM.

7. Méthode de preuve de temps écoulé entre transactions successives selon l'une des revendications 3 à 6, **caractérisée en ce que**, préalablement à l'émission des transactions successives, le noeud client émet une transaction d'enregistrement (510) à destination du registre distribué, ladite transaction d'enregistrement comprenant une valeur initiale du compteur monotone, et indique les valeurs initiales de l'horloge de contrôle, de l'horloge système et de l'horloge de précision.

8. Méthode de vérification du temps écoulé entre transactions successives émises par un noeud client mettant en oeuvre la méthode de preuve de temps écoulé selon l'une des revendications 3 à 7, la vérification étant effectuée par un noeud tiers du réseau asynchrone, dit noeud validateur, pour une nouvelle transaction émise par le noeud client, ladite méthode étant **caractérisée en ce que** le noeud validateur extrait de la transaction courante la valeur du compte monotone et vérifie dans le registre distribué qu'elle est identique à celle de la transaction précédente, puis extrait les dérives des seconde et troisième horloges et les compare à une marge de tolérance prédéterminée pour vérifier la cohérence des horloges du noeud client.

9. Méthode de vérification du temps écoulé entre transactions successives émises par un noeud client selon la revendication 8, **caractérisée en ce que**, préalablement à la vérification de la cohérence des horloges du noeud client, le noeud vérificateur s'assure à l'aide de la signature de la transaction que celle-ci a bien été émise par le noeud client.

10. Méthode de vérification du temps écoulé entre transactions successives émises par un noeud client selon la revendication 8 ou 9, **caractérisée en ce que** le noeud vérificateur extrait de la transaction du noeud client la valeur de l'horloge de précision et la compare à la valeur de sa propre horloge de précision à la réception de cette transaction, et vérifie que la différence de la seconde avec la première est supérieure à zéro et inférieure un temps de propagation maximal prédéterminé.

11. Méthode de vérification du temps écoulé entre transactions successives émises par un noeud client selon l'une des revendications 8 à 10, **caractérisée en ce que** le noeud vérificateur est un noeud présentant un degré de fiabilité supérieur à une valeur prédéterminée, le degré de fiabilité d'un noeud étant une fonction croissante du nombre de transactions validées avec succès et du temps écoulé depuis son enregistrement dans le registre distribué.

12. Méthode de vérification du temps écoulé entre transactions successives émises par un noeud client selon l'une des revendications 8 à 11, **caractérisée en ce que**, si la vérification a été effectuée avec succès, le noeud validateur émet une transaction, dite de transaction de validation, comprenant un haché de la transaction validée et le temps auquel elle a été reçue, mesurée par l'horloge de précision du noeud validateur.

13. Méthode de vérification du temps écoulé entre transactions successives émises par un noeud client selon la revendication 12, **caractérisée en ce que** le noeud validateur vérifie préalablement la cohérence de ses première, seconde et troisième horloges avant d'émettre la transaction de validation vers le registre distribué.

**14.** Méthode de vérification du temps écoulé entre transactions successives émises par un noeud client selon la revendication 13, **caractérisée en ce que** la transaction de validation comprend les mesures du temps auquel est effectuée la validation au moyen des première, seconde et troisième horloges, la valeur du compteur monotone du noeud validateur ainsi que les dérives des seconde ( $\varepsilon_{TEE}^{val}$ ) et troisième horloge ( $\varepsilon_{GPS}^{val}$ ) du noeud validateur par rapport à la première horloge du noeud validateur sur l'intervalle de temps écoulé depuis la dernière transaction émise par le noeud validateur.

**15.** Méthode de vérification du temps écoulé entre transactions successives émises par un noeud client selon la revendication 14, **caractérisée en ce que** la transaction de validation comprend en outre un haché du code exécutant la vérification dans l'environnement TEE du noeud validateur, au moment où la transaction du noeud client est validée.

## Patentansprüche

**1.** Verfahren zum Nachweis der Zeit, die zwischen aufeinanderfolgenden Ereignissen verstrichen ist, die in einem Knoten eines asynchronen Netzwerks auftreten, wobei der Knoten ein eingebettetes System (200) umfasst, das in einen vertrauenswürdigen Bereich (210) und einen unsicheren Bereich (220) aufgeteilt ist, wobei der vertrauenswürdige Bereich eine sichere Ausführungsumgebung oder TEE (213), in der die Integrität und die Vertraulichkeit des Codes und der Daten gewährleistet sind, und eine vertrauenswürdige Hardwarekomponente oder TPM (215) umfasst, die einen ersten Zeitgeber, den sogenannten Steuerzeitgeber, der die seit seiner letzten Initialisierung verstrichene Zeit angibt, und einen monotonen Zähler enthält, der die Anzahl der Initialisierungen des Steuerzeitgebers angibt, wobei die TEE-Umgebung über einen zweiten Zeitgeber, den sogenannten Systemzeitgeber, versehen ist und einerseits den Steuerzeitgeber der TPM und andererseits einen dritten Zeitgeber, den sogenannten Präzisionszeitgeber, eines Peripheriegeräts außerhalb des eingebetteten Systems empfängt, wobei der Steuerzeitgeber einen höheren Sicherheitsgrad aufweist als der Systemzeitgeber und der Präzisionszeitgeber, wobei der Präzisionszeitgeber eine höhere Präzision und Stabilität aufweist als die des Steuerzeitgebers und des Systemzeitgebers, wobei die aufeinanderfolgenden Ereignisse mindestens zwei nacheinander in dem Knoten auftretende Ereignisse, als vorheriges Ereignis und späteres Ereignis bezeichnet, beinhaltet, wobei:

eine Anwendung in der TEE-Umgebung misst (410) die Zeit, zu der das vorherige Ereignis auftritt, wobei das Messen unter Verwendung des ersten, des zweiten und des dritten Zeitgebers durchgeführt wird, um eine erste, eine zweite und eine dritte Zeitmessung in Bezug auf das vorherige Ereignis bereitzustellen;
die Anwendung misst (410) die Zeit, zu der das spätere Ereignis eintritt, wobei das Messen unter Verwendung des ersten, des zweiten und des dritten Zeitgebers durchgeführt wird, um eine erste, eine zweite und eine dritte Zeitmessung in Bezug auf das spätere Ereignis bereitzustellen;
die Anwendung bestimmt (420) anhand der so erhaltenen Messungen jeweils für das vorherige Ereignis und für das spätere Ereignis eine erste, eine zweite und eine dritte Messung der zwischen dem vorherigen Ereignis und dem späteren Ereignis verstrichenen Zeit;
die Anwendung verifiziert die Kohärenz (430) des ersten, des zweiten und des dritten Zeitgebers, indem sie die so erhaltenen Messungen der verstrichenen Zeit vergleicht, und, wenn sie sich nicht um mehr als eine vorbestimmte Toleranzspanne unterscheiden, eine Nachweisbenachrichtigung (440) über die zwischen dem vorherigen Ereignis und dem späteren Ereignis verstrichene Zeit bildet, wobei die Benachrichtigung über die verstrichene Zeit den Wert des monotonen Zählers, die Zeitmessungen in Bezug auf das spätere Ereignis und die Verschiebungen des zweiten ($\varepsilon_{TEE}$) und des dritten Zeitgebers ($\varepsilon_{GPS}$) in Bezug auf den ersten Zeitgeber über das verstrichene Zeitintervall umfasst;
die Anwendung signiert (460) die Benachrichtigung mit einem privaten Schlüssel des Knotens, bevor sie sie über das asynchrone Netzwerk überträgt.

**2.** Verfahren zum Nachweis der zwischen aufeinanderfolgenden Ereignissen verstrichenen Zeit nach Anspruch 1, **dadurch gekennzeichnet, dass** die Verschiebungen des Steuerzeitgebers und des Systemzeitgebers in Bezug auf den Präzisionszeitgeber durch die Anwendung in die Zeit integriert werden, und dass, wenn einer von diesen einen vorbestimmten Maximalwert überschreitet, dieser korrigiert wird.

**3.** Verfahren zum Nachweis der zwischen aufeinanderfolgenden Transaktionen verstrichenen Zeit, die von einem Knoten, den sogenannten Client-Knoten, der für ein verteiltes Register bestimmt ist, gesendet werden, **dadurch gekennzeichnet, dass** es ein Verfahren zum Nachweis der zwischen aufeinanderfolgenden Ereignissen verstrichenen Zeit nach Anspruch 1 oder 2 implementiert, wobei jedes der aufeinanderfolgenden Ereignisse das Bilden einer Transaktion durch den Client-Knoten ist.

4. Verfahren zum Nachweis der zwischen aufeinanderfolgenden Transaktionen verstrichenen Zeit nach Anspruch 3, **dadurch gekennzeichnet, dass** die von dem Client-Knoten gesendete Transaktion ferner einen Hash des Codes der Anwendung zum Zeitpunkt des Bildens der Transaktion umfasst.

5. Verfahren zum Nachweis der zwischen aufeinanderfolgenden Transaktionen verstrichenen Zeit nach Anspruch 3 oder 4, **dadurch gekennzeichnet, dass** die von dem Client-Knoten gesendete Transaktion ferner den Wert eines Transaktionenzählers umfasst, wobei der Zähler bei jeder gesendeten Transaktion inkrementiert wird.

6. Verfahren zum Nachweis der zwischen aufeinanderfolgenden Transaktionen verstrichenen Zeit nach einem der Ansprüche 3 bis 5, **dadurch gekennzeichnet, dass** die von dem Client-Knoten gesendete Transaktion ferner eine Messung der Zeit umfasst, zu der die vorherige Transaktion gesendet wurde, wobei die Messung mittels des Steuerzeitgebers durchgeführt wurde und mit einem privaten Schlüssel des TPM-Moduls signiert ist.

7. Verfahren zum Nachweis der zwischen aufeinanderfolgenden Transaktionen verstrichenen Zeit nach einem der Ansprüche 3 bis 6, **dadurch gekennzeichnet, dass** der Client-Knoten vor dem Senden der aufeinanderfolgenden Transaktionen eine Aufzeichnungstransaktion (510) sendet, die für das verteilte Register bestimmt ist, wobei die Aufzeichnungstransaktion einen Anfangswert des monotonen Zählers umfasst und die Anfangswerte des Steuerzeitgebers, des Systemzeitgebers und des Präzisionszeitgebers angibt.

8. Verfahren zum Verifizieren der zwischen aufeinanderfolgenden, von einem Client-Knoten gesendeten Transaktionen verstrichenen Zeit, das das Verfahren zum Nachweis der verstrichenen Zeit nach einem der Ansprüche 3 bis 7 implementiert, wobei das Verifizieren von einem Drittknoten des asynchronen Netzwerks, dem sogenannten Validierungsknoten, für eine neue Transaktion durchgeführt wird, die von dem Client-Knoten gesendet wird, wobei das Verfahren **dadurch gekennzeichnet ist, dass** der Validierungsknoten aus der aktuellen Transaktion den Wert der monotonen Zählung extrahiert und im verteilten Register verifiziert, dass er mit dem der vorherigen Transaktion identisch ist, und dann die Verschiebungen des zweiten und des dritten Zeitgebers extrahiert und sie mit einer vorbestimmten Toleranzspanne vergleicht, um die Kohärenz der Zeitgeber des Client-Knotens zu verifizieren.

9. Verfahren zum Verifizieren der zwischen aufeinanderfolgenden, von einem Client-Knoten gesendeten Transaktionen verstrichenen Zeit nach Anspruch 8, **dadurch gekennzeichnet, dass** der Verifizierungsknoten vor dem Verifizieren der Kohärenz der Zeitgeber des Client-Knotens mithilfe der Signatur der Transaktion sicherstellt, dass letztere tatsächlich vom Client-Knoten gesendet wurde.

10. Verfahren zum Verifizieren der zwischen aufeinanderfolgenden, von einem Client-Knoten gesendeten Transaktionen verstrichenen Zeit nach Anspruch 8 oder 9, wobei der Verifizierungsknoten aus der Transaktion des Client-Knotens den Wert des Präzisionszeitgebers extrahiert und ihn beim Empfangen dieser Transaktion mit dem Wert seines Präzisionszeitgebers vergleicht und verifiziert, dass die Differenz des zweiten mit dem ersten größer als Null und kürzer als eine vorbestimmte maximale Laufzeit ist.

11. Verfahren zum Verifizieren der zwischen aufeinanderfolgenden, von einem Client-Knoten gesendeten Transaktionen verstrichenen Zeit nach einem der Ansprüche 8 bis 10, **dadurch gekennzeichnet, dass** der Verifizierungsknoten ein Knoten mit einem Zuverlässigkeitsgrad ist, der höher als ein vorbestimmter Wert ist, wobei der Zuverlässigkeitsgrad eines Knotens mit der Anzahl erfolgreich validierter Transaktionen und mit der seit deren Aufzeichnung in dem verteilten Register verstrichenen Zeit zunimmt.

12. Verfahren zum Verifizieren der zwischen aufeinanderfolgenden, von einem Client-Knoten gesendeten Transaktionen verstrichenen Zeit nach einem der Ansprüche 8 bis 11, **dadurch gekennzeichnet, dass** der Validierungsknoten, wenn die Verifizierung erfolgreich durchgeführt wurde, eine Transaktion, die sogenannte Validierungstransaktion, sendet, die einen Hash der validierten Transaktion und die Zeit, zu der sie empfangen wurde, gemessen durch den Präzisionszeitgeber des Validierungsknotens, umfasst.

13. Verfahren zum Verifizieren der zwischen aufeinanderfolgenden, von einem Client-Knoten gesendeten Transaktionen verstrichenen Zeit nach Anspruch 12, **dadurch gekennzeichnet, dass** der Validierungsknoten zuvor die Kohärenz seines ersten, zweiten und dritten Zeitgebers verifiziert, bevor er die Validierungstransaktion an das verteilte Register sendet.

**14.** Verfahren zum Verifizieren der zwischen aufeinanderfolgenden, von einem Client-Knoten gesendeten Transaktionen verstrichenen Zeit nach Anspruch 13, **dadurch gekennzeichnet, dass** die Validierungstransaktion die Messungen der Zeit, zu der die Validierung mittels des ersten, des zweiten und des dritten Zeitgebers durchgeführt wird, den Wert des monotonen Zählers des Validierungsknotens sowie die Verschiebungen des zweiten ( $\varepsilon_{TEE}^{val}$ ) und des dritten ( $\varepsilon_{GPS}^{val}$ ) Zeitgebers des Validierungsknotens in Bezug auf den ersten Zeitgeber des Validierungsknotens über das Zeitintervall, das seit der letzten von dem Validierungsknoten gesendeten Transaktion verstrichen ist, umfasst.

**15.** Verfahren zum Verifizieren der zwischen aufeinanderfolgenden, von einem Client-Knoten gesendeten Transaktionen verstrichenen Zeit nach Anspruch 14, **dadurch gekennzeichnet, dass** die Validierungstransaktion ferner einen Hash des Codes umfasst, der das Verifizieren in der TEE-Umgebung des Validierungsknotens zu dem Zeitpunkt ausführt, zu dem die Transaktion des Client-Knotens validiert wird.

**Claims**

**1.** A method for proving time elapsed between successive events occurring in a node of an asynchronous network, said node comprising an embedded system (200) partitioned into a trusted zone (210) and an unsecured zone (220), the trusted zone comprising a secure execution environment or TEE (213) wherein the integrity and confidentiality of the code and data are ensured, and a trusted hardware component or TPM (215) including a first clock, called a control clock giving the time elapsed from its last initialisation and a monotonic counter indicating the number of initialisations of the control clock, the TEE environment having a second clock, called the system clock, and receiving on the one hand the TPM control clock and on the other hand a third clock, called the precision clock, from a peripheral external to the on-board system, the control clock having a greater degree of security than the system clock and the precision clock, the precision clock having greater precision and stability than the control clock and the system clock, the successive events including at least two events occurring successively in the node, called previous event and subsequent event, wherein:

an application residing in the TEE environment measures (410) the time at which the previous event occurs, the measurement being carried out using the first, the second and the third clocks, to provide a first, a second and a third time measurement relating to the previous event;
said application measures (410) the time at which the subsequent event occurs, the measurement being carried out using the first, second and third clocks, to provide first, second and third relative time measurements to the subsequent event;
said application determines (420), from the measurements thus obtained respectively for the previous event and for the subsequent event, a first, a second and a third measurements of time elapsed between the previous event and the subsequent event;
said application verifies the consistency (430) of the first, second and third clocks by comparing the elapsed time measurements thus obtained and if they do not differ by more than a predetermined tolerance margin, forms a proof message (440) of elapsed time between the previous event and the subsequent event, the elapsed time message comprising the value of the monotonic counter, the time measurements relating to the subsequent event and the drifts of the second ($\varepsilon_{TEE}$) and third clock ($\varepsilon_{GPS}$) relative to the first clock on the elapsed time interval;
said application signs (460) said message with a private key of the node before transmitting it over the asynchronous network.

**2.** The method for proving time elapsed between successive events according to claim 1, **characterised in that** the drifts of the control clock and the system clock relative to the precision clock are integrated over time by said application and that, when one of them exceeds a predetermined maximum value, this is corrected.

**3.** The method for proving time elapsed between successive transactions emitted by a node, called a client node, to a distributed register, **characterised in that** it implements a method for proving time elapsed between successive events according to claim 1 or 2, each of the successive events being the formation of a transaction by said client node.

**4.** The method for proving time elapsed between successive transactions according to claim 3, **characterised in that** the transaction emitted by the client node further comprises a hash of the application code at the time the transaction is formed.

**5.** The method for proving time elapsed between successive transactions according to claim 3 or 4, **characterised in that** the transaction emitted by the client node further comprises the value of a transaction counter, said counter being incremented with each transaction emitted.

**6.** The method for proving time elapsed between successive transactions according to one of claims 3 to 5, **characterised in that** the transaction emitted by the client node further comprises a measurement of the time at which the previous transaction was emitted, the measurement having been carried out using the control clock and being signed by a private key of the TPM module.

**7.** The method for proving time elapsed between successive transactions according to one of claims 3 to 6, **characterised in that**, prior to the emission of successive transactions, the client node emits a recording transaction (510) to the distributed register, said recording transaction comprising an initial value of the monotonic counter, and indicates the initial values of the control clock, the system clock and the precision clock.

**8.** A method for verifying the time elapsed between successive transactions emitted by a client node implementing the method for proving elapsed time according to one of claims 3 to 7, the verification being carried out by a third party node of the asynchronous network, called validator node, for a new transaction emitted by the client node, said method being **characterised in that** the validator node extracts from the current transaction the value of the monotonic account and verifies in the distributed register that it is identical to that of the previous transaction, then extracts the drifts of the second and third clocks and compares them to a predetermined tolerance margin to verify the consistency of the client node clocks.

**9.** The method for verifying the time elapsed between successive transactions emitted by a client node according to claim 8, **characterised in that**, prior to verifying the consistency of the clocks of the client node, the verifying node ensures using the signature of the transaction that it has been emitted by the client node.

**10.** The method for verifying the time elapsed between successive transactions emitted by a client node according to claim 8 or 9, **characterised in that** the verifying node extracts the value of the precision clock from the transaction of the client node and compares it to the value of its own precision clock upon receiving this transaction, and verifies that the difference of the second with the first is greater than zero and less than a predetermined maximum propagation time.

**11.** The method for verifying the time elapsed between successive transactions emitted by a client node according to one of claims 8 to 10, **characterised in that** the verifying node is a node having a degree of reliability greater than a predetermined value, the degree of reliability of a node being an increasing function of the number of successfully validated transactions and the time elapsed since its registration in the distributed register.

**12.** The method for verifying the time elapsed between successive transactions emitted by a client node according to one of claims 8 to 11, **characterised in that**, if the verification has been carried out successfully, the validator node emits a transaction, called a validation transaction, comprising a hash of the validated transaction and the time at which it was received, measured by the precision clock of the validator node.

**13.** The method for verifying the time elapsed between successive transactions emitted by a client node according to claim 12, **characterised in that** the validator node first verifies the consistency of its first, second and third clocks before emitting the validation transaction to the distributed register.

**14.** The method for verifying the time elapsed between successive transactions emitted by a client node according to claim 13, **characterised in that** the validation transaction comprises measurements of the time at which validation is carried out by means of the first, second and third clocks, the value of the monotonic counter of the validator node as well as the drifts of the second ( $\varepsilon_{TEE}^{val}$ ) and third ( $\varepsilon_{GPS}^{val}$ ) clock of the validator node relative to the first clock of the validator node over the time interval elapsed since the last transaction emitted by the validator node.

**15.** The method for verifying the time elapsed between successive transactions emitted by a client node according to claim 14, **characterised in that** the validation transaction further comprises a hash of the code executing the verification in the TEE environment of the validator node, at the time where the transaction of the client node is validated.

FIG. 1

FIG. 2

EP 4 318 293 B1

Horloges de la transaction
$tx_i$ Précédente acquitée

Horloges de la transaction $tx_{i+1}$
en cours de construction

time_TPM ($tx_i$)    $\Delta_{TPM}$    time_TPM ($tx_{i+1}$)    TPM timer

time_TEE ($tx_i$)    $\Delta_{TEE}$    time_TEE ($tx_{i+1}$)OP-TEE TA persistent timer

time_REE ($tx_i$)    $\Delta_{REE}$    time_REE ($tx_{i+1}$)    REE timer

time_GPS ($tx_i$)    $\Delta_{GPS}$    time_GPS ($tx_{i+1}$)    GPS timer

$-\varepsilon\_max$    $\varepsilon\_max$

temps

# FIG. 3

mesure des temps auxquels interviennent les évènements successifs avec les horloges du noeud $Clk\_TPM, Clk\_TEE, Clk\_GPS, Clk\_REE$ — 410

mesure de l'intervalle de temps séparant l'évènement postérieur de l'évènement antérieur $\Delta_{TPM}, \Delta_{TEE}, \Delta_{GPS}, \Delta_{REE}$ — 420

cohérence des mesures ? — 430

cumul des dérives supérieur à un seuil ? — 440

correction des dérives / $Clk\_GPS$ — 445

formation d'un message de preuve de temps écoulé — 450

signature du message par la clé privée du nœud — 460

# FIG. 4

510

enregistrement du nœud client dans le registre distribué (ledger)
stockage du compteur de RAZ
et de l'heure initiale de chaque horloge

$$time\_TPM(tx_0), time\_TEE(tx_0), time\_GPS(tx_0)$$

520

émission d'une transaction client vers le registre
distribué comprenant le compteur de RAZ,
les valeurs d'horloge si cohérence des temps écoulés
depuis la transaction précédente

530

vérification de la preuve de temps écoulé de la transaction
client émission d'une transaction de validation
vers le registre distribué

# FIG. 5

# FIG. 6A

**EMETTEUR** 20

**TPM**

TPM timer

**SECURE WORLD OP-TEE**

system timer

persistent TA timer

TA établit la consistance du temps écoulé

**NORMAL WORLD**

GPS timer

REE timer

GPS

tx_client
if consistency elapsed-time ok

tx_client
if consistency elapsed-time ok

tx_client
if consistency elapsed-time ok

tx_enrôlement
registration start time

Δt

Δt

elapsed time Δt

FIG. 6B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2021176058 A

- US 2021314143 A

**Littérature non-brevet citée dans la description**

- Verifiable delay functions. **D. BONEH et al.** Advances in Cryptology, , CRYPTO 2018. Springer Int'l Publishing, 2018, 757-788

- **MIC BOWMA et al.** On Elapsed Time Consensus Protocols. *IACR, International Association for Cryptologic Research,* 23 Janvier 2021, vol. 20210127 (132313), 1-47